# EUROPEAN PATENT APPLICATION

(11) **EP 2 733 161 A1**
(43) Date of publication of application: **21.05.2014**
(21) Application number: 12811800.7
(22) Date of filing: 05.07.2012
(51) Int. Cl.: C08J 5/24

(54) **THERMOPLASTIC RESIN PRE-PREG, MOLDED PREFORM AND MOLDED COMPOSITE USING SAME, AND METHOD FOR PRODUCING MOLDED PREFORM AND MOLDED COMPOSITE**

(30) Priority: 11.07.2011 JP 2011152825
(71) Applicant: Toray Industries, Inc., Tokyo 103-8666 (JP)
(72) Inventor: ETO Rinako, Nagoya-shi Aichi 455-8502 (JP); WADAHARA Eisuke, Nagoya-shi Aichi 455-8502 (JP); SASAKI Takeru, Nagoya-shi Aichi 455-8502 (JP); MORIHARA Masayoshi, Nagoya-shi Aichi 455-8502 (JP); HORIUCHI Syunsuke, Nagoya-shi Aichi 455-8502 (JP)
(74) Representative: Hoefer & Partner
(86) International application number: PCT/JP2012/067204
(87) International publication number: WO 2013/008720

(57) **Abstract**

A thermoplastic resin prepreg characterized in comprising at least: a constituent element (I) which is 20-60 weight parts of a thermoplastic resin (A) having a linear or branched polymer structure; a constituent element (II) which is 2-10 weight parts of a thermoplastic resin (B) which is unevenly distributed to a surface site and has a melting point lower than that of the thermoplastic resin (A); and a constituent element (III) which is 30-78 weight parts of reinforcing fibers, also, a molded preform and a molded composite using the same, and methods for producing them. When thermoplastic resin prepregs are stacked together or when a thermoplastic resin prepreg is used in insert-molding, the present invention makes it possible to efficiently enhance the surface adhesiveness of the prepreg without causing a reduction in mechanical properties, and makes it possible to ensure a desired adhesiveness during molding of the molded preform and molded composite.

## Description

### Technical Yield of the Invention

The present invention relates to a thermoplastic resin prepreg exhibiting an excellent adhesiveness, for example, when thermoplastic resin prepregs are stacked to each other, or when an insert-molding (or an outsert-molding) is performed using a thermoplastic resin prepreg, a molded preform and a molded composite using the same, and methods for producing them.

### Background Art of the Invention

A conventional thermoplastic resin prepreg comprising reinforcing fibers and a thermoplastic matrix resin has been poor in adhesiveness between prepregs in press molding in which prepregs are stacked to each other, injection molding in which a prepreg is inserted (or outserted), injection press molding, etc. Therefore, there has been a problem that a thermoplastic resin prepreg is delaminated before mechanical properties of a molded composite itself are exhibited satisfactorily.

With respect to this problem, although there is a method for using a low-melting-point and high-flowability resin as the matrix resin itself of a thermoplastic resin prepreg in order to improve the adhesiveness (for example, Patent document 1), there is a problem that a low-melting-point and low-molecular-weight resin is poor in mechanical properties.

Further, for example, if press molding is performed at a condition elevating a temperature or a pressure in order to enhance the adhesiveness of a thermoplastic resin prepreg, at the time of the press molding, reinforcing fibers tend to be flowed together with a high-flowability resin and to be disturbed in orientation. Therefore, it has been difficult to control the mechanical properties, the warp and the appearance of a molded composite, the conditions for molding have been restricted, and further, thinning of the molded composite has been difficult.

### Prior art documents

### Patent documents

Patent document 1: JP-A-2008-231292

### Summary of the Invention

### Problems to be solved by the Invention

Accordingly, paying attention to the above-described present circumstances, an object of the present invention is to provide a thermoplastic resin prepreg which enables to efficiently improve the adhesiveness of a prepreg surface without generating a reduction of the mechanical properties due to the kind of a matrix rein itself of the thermoplastic resin prepreg, for example, when thermoplastic resin prepregs are stacked to each other, or when an insert (or outsert) molding is performed using the thermoplastic resin prepreg, and to ensure a desirable adhesiveness at the time of molding of a molded preform and/or a molded composite using the same, and a molded preform and a molded composite using the same, and methods for producing them.

### Means for solving the Problems

To achieve the above-described object, a thermoplastic resin prepreg according to the present invention comprises at least the following constituent elements (I) to (III):
a constituent element (I): 20-60 parts by weight of a thermoplastic resin (A) having a linear or branched polymer structure;
a constituent element (II): 2-10 parts by weight of a thermoplastic resin (B) which is unevenly distributed to a surface site and has a melting point lower than that of the thermoplastic resin (A); and
a constituent element (III): 30-78 parts by weight of reinforcing fibers.

In such a thermoplastic resin prepreg according to the present invention, the constituent element (II) comprising the thermoplastic resin (B), which is unevenly distributed to a surface site and has a lower melting point, exhibits a high adhesiveness, and the high adhesiveness is exhibited only at the surface site of the prepreg. On the other hand, since the inner layer part of the prepreg is formed from a matrix resin comprising the constituent element (I) composed of the thermoplastic resin (A) having a linear or branched polymer structure and having a higher melting point and the constituent element (III) composed of reinforcing fibers, after molding, high mechanical properties almost equal to those of a usual FRP (Fiber-Reinforced Plastic) can be exhibited, a reduction of mechanical properties, in case where a thermoplastic resin having a low melting point is used as a matrix resin, can be prevented. Therefore, by using this thermoplastic resin prepreg according to the present invention, in press molding performed at a condition where prepregs are stacked to each other, or injection molding or injection press molding performed at a condition where a prepreg is inserted, and the like, an excellent adhesiveness between base materials can be obtained, and a delamination of a base material can be prevented as well as high mechanical properties of a molded material can be achieved.

In the above-described thermoplastic resin prepreg according to the present invention, for example, a constitution can be employed wherein the above-described thermoplastic resin (A) and the thermoplastic resin (B) comprise same kind of resins except molecular structures thereof. Because the affinity between the resins is high if they are same kind of resins, such a situation that the layers of the thermoplastic resin (A) and the thermoplastic resin (B) cause an interlayer delamination can be easily avoided.

More concretely, for example, the thermoplastic resin prepreg according to the present invention can be realized by a constitution wherein the above-described thermoplastic resin (A) comprises a homopolymer resin, and the above-described thermoplastic resin (B) comprises a copolymer resin or a random polymer resin. By using a copolymer resin or a random polymer resin for the thermoplastic resin (B), a lower melting point can be realized, and in a surface site of the prepreg, a desired and excellent adhesiveness can be realized.

Alternatively, the thermoplastic resin prepreg according to the present invention can be realized by a constitution wherein the above-described thermoplastic resin (A) comprises a polyamide 6 resin, a polyamide 66 resin, a polyamide 46 resin or a polyamide 9T resin, and the above-described thermoplastic resin (B) comprises a copolymerized polyamide resin, a polyamide 11 resin, a polyamide 12 resin or a polyamide 610 resin. By using a copolymerized polyamide resin, a polyamide 11 resin, a polyamide 12 resin or a polyamide 610 resin for the thermoplastic resin (B), a lower melting point can be realized, and in a surface site of the prepreg, a desired and excellent adhesiveness can be realized.

Further, the thermoplastic resin prepreg according to the present invention can be realized by a constitution wherein the above-described thermoplastic resin (A) has a linear or branched polymer structure, and the above-described thermoplastic resin (B) has a cyclic molecular structure. By using the thermoplastic resin (B) having a cyclic molecular structure, a lower melting point can be realized, and in a surface site of the prepreg, a desired and excellent adhesiveness can be realized.

More concretely, for example, a constitution can be raised wherein the above-described thermoplastic resin (A) comprises a high-molecular-weight polyphenylene sulfide with a weight average molecular weight of 10,000 or more, and the above-described thermoplastic resin (B) comprises a resin composition whose main constituent is a cyclic polyphenylene sulfide represented by the following chemical formula (1). Where, the "resin composition whose main constituent is a cyclic polyphenylene sulfide" means a resin composition containing a cyclic polyphenylene sulfide at a content of 50 wt.% or more, and for example, a mixture of 50 wt.% of a cyclic polyphenylene sulfide and 50 wt.% of a linear or branched polymer-structure polyphenylene sulfide is also included in the thermoplastic resin (B) of the present invention. Of course, 100 wt.% of a cyclic polyphenylene sulfide may be employed. 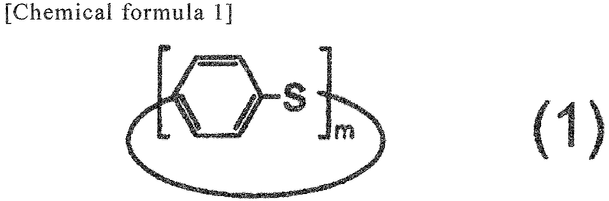 (Where, "m" represents an integer of 4 to 20, and "m" may be a mixture of 4 to 20.)

Further, a constitution can also be exemplified as a preferable embodiment wherein the above-described thermoplastic resin (A) comprises a high-molecular-weight polyetheretherketone with a weight average molecular weight of 10,000 or more, and the above-described thermoplastic resin (B) comprises a resin composition whose main constituent is a cyclic polyetheretherketone. Except these, a combination of a high-molecular-weight polybutylene terephthalate and a cyclic polybutylene terephthalate and a combination of a high-molecular-weight polycarbonate and a cyclic polycarbonate can also be exemplified.

Further, in the thermoplastic resin prepreg according to the present invention, a constitution can also be employed wherein the above-described thermoplastic resin (A) and the thermoplastic resin (B) comprise different kind of resins. Even if they are different kind of resins, as long as the properties required to the respective thermoplastic resin (A) and thermoplastic resin (B) can be satisfied without causing an interlayer delamination, it is possible to obtain a performance similar to that in case of the above-described same kind of resins.

More concretely, for example, a constitution can be raised wherein the above-described thermoplastic resin (A) comprises a polyphenylene sulfide resin, a polyamide resin or a polyolefin resin, and the above-described thermoplastic resin (B) comprises a resin composition whose main constituent is an epoxy resin which substantially does not contain a curing agent. Since an epoxy resin, which substantially does not contain a curing agent, quasi exhibits a plasticity due to heat similarly in a thermoplastic resin, a resin composition, which does not contain a curing agent, can be treated as a thermoplastic resin. Where, the expression "substantially does not contain a curing agent" means a range exhibiting a plasticity due to heat as the whole even if a part of an epoxy resin is cured. Of course, because an epoxy resin, which contains a curing agent and can be cured as a resin, does not exhibit a plasticity due to heat, it is a thermosetting resin.

Further, in the thermoplastic resin prepreg according to the present invention, the existence formation of the above-described thermoplastic resin (B) unevenly distributed to the surface site is not particularly restricted, and for example, a formation wherein the thermoplastic resin (B) exists on the entire surface of the above-described thermoplastic resin (A) at a layer form, or a formation wherein the thermoplastic resin (B) exists on a surface of the thermoplastic resin (A) at a particle-like or fiber-like form, can be employed. Furthermore, the thermoplastic resin (B) may exist on a surface of the thermoplastic resin (A) at an island/sea-like form (or a reverse island/sea-like form).

Further, although the formation of the whole of the thermoplastic resin prepreg according to the present invention also is not particularly restricted, as long as the thermoplastic resin prepreg is formed as a sheet-like shape, stacking is easy and it is possible to easily align it even along an inner surface of a mold having a relatively complicated shape, and therefore, such a formation is desirable for press molding or insert molding.

Further, the formation of the above-described reinforcing fibers also is not particularly restricted, if at least a part of the reinforcing fibers have a form of a unidirectional reinforcing fiber base material in which continuous reinforcing fibers are arranged in a single direction in parallel to each other, the reinforcing fibers can be efficiently oriented in a specified direction, and in particular, the mechanical properties in the specified direction can be easily enhanced. Further, if at least a part of the above-described reinforcing fibers have a form of a reinforcing fiber woven fabric, quasi-isotropic mechanical properties can be easily obtained.

Further, the kind of the above-described reinforcing fibers also is not particularly restricted, and although carbon fibers, glass fibers, aramide fibers, or reinforcing fibers having a mixed formation combined with any of these, can be employed, if the reinforcing fibers include carbon fibers, high mechanical properties (strength, elastic modulus) can be easily obtained.

The present invention also provides a molded preform wherein a plurality of the above-described thermoplastic resin prepregs are stacked, they are heated and pressed, and they are integrated via a thermoplastic resin (B) which is interposed between the thermoplastic resin prepregs. In such a molded preform, since the thermoplastic resin prepregs are integrated with each other via the thermoplastic resin (B) having an excellent adhesiveness, even under a severe molding condition, it can be suppressed that the prepreg is easily delaminated. Further, when the above-described molded preform or a molded composite described later is molded using the thermoplastic resin prepregs, for example, there is a case where the prepregs are made temporarily adhere (temporal fixing, temporal holding) to each other before molding. Even in such a case, the temporal adhesion can be performed via the above-described thermoplastic resin (B). By such a temporal adhesion, before molding, for example, not only an appropriate nerve capable of stably conveying the material stacked with the prepregs to each other can be given, but also an effect for stabilizing a formation such as preventing a fibrous disorder of a prepreg and maintaining a precise orientation angle can be exhibited, and an excellent handling ability can be given. Moreover, because of temporal adhesion (temporal fixing, temporal holding), in case where an inconvenience occurs, for example, by heating at a temperature higher than the melting point of the thermoplastic resin (B) and lower than the melting point of the thermoplastic resin (A), it can also be done to delaminate the temporal-adhesion material and anew make it adhere.

fllternatively, in the present invention, a molded preform can also be provided wherein the above-described thermoplastic resin prepreg is stacked together with a thermoplastic resin sheet, they are heated and pressed, and they are integrated via a thermoplastic resin (B) which is unevenly distributed to a surface site of the thermoplastic resin prepreg. In case of obtaining a molded composite by placing the above-described thermoplastic resin prepreg in a mold, and insert-molding the above-described thermoplastic resin prepreg by supplying a melted resin around the thermoplastic resin prepreg in the mold, by the condition being with the above-described thermoplastic resin sheet, the thermoplastic resin sheet exhibits a function of a spacer, the thermoplastic resin prepreg can be disposed at a position including a center in the thickness direction of a molded composite to be molded. Namely, since the thermoplastic resin (B), which is unevenly distributed to a surface site of the thermoplastic resin prepreg, is placed in advance, a molded preform is easily formed, and only by placing the molded preform in a mold so that the above-described thermoplastic resin sheet is brought into contact with the inner surface of the mold, it becomes possible to position the thermoplastic resin prepreg at the time of insert molding at a central portion in the thickness direction of a molded composite to be molded, very easily without using a special jig and the like. In particular, by setting the thickness of the thermoplastic resin sheet at an adequate thickness relatively to the whole thickness of the molded composite to be molded or the thickness of the thermoplastic resin prepreg, it becomes possible to very easily dispose the thermoplastic resin prepreg at a position including a center in the thickness direction of the molded composite to be molded. Although the insert molding due to the melted resin is performed at such a disposition condition of the molded preform, during and after the insert molding, since the thermoplastic resin prepreg is maintained at a condition being disposed at a central portion in the thickness direction of the molded composite to be molded (in particular, at a position including a center in the thickness direction of the molded composite to be molded), occurrence of a warp originating from a difference in rate of shrinkage between the matrix resin of the thermoplastic resin prepreg and the melted resin can be prevented or greatly suppressed. Further, because merely the thermoplastic resin prepreg is replaced for the above-described molded preform as the insert molding itself and a usual insert-molding method can be applied with no problem, it is not necessary to use a special holding jig for positioning, for example, such as one shown in JP-A-2001-293746, and therefore, an excellent moldability and an excellent productivity can be easily ensured. Furthermore, if the above-described resin sheet is placed in a mold so as to be disposed at a position of an outer surface side of a molded composite to be molded, a molded composite having an excellent appearance can be easily obtained, and a molded composite excellent in productivity and also in appearance can be obtained.

In the above-described molded preform according to the present invention, a structure can be employed wherein a side surface of the molded preform has a concave shape or a stepped shape. In such a structure, a melted resin flows into the part having the concave shape or the stepped shape on the side surface of the molded preform, for example, into a side surface part of a molded preform when the molded preform is insert-molded with a melted resin, and as a result, a good adhesiveness between the molded preform and the liquefied resin can be ensured. In particular, in case of a concave and stepped shape, because insufficient charge of a melted resin on the surface of a molded composite can also be suppressed to be minimum, reduction of the quality in appearance of the molded composite obtained can also be prevented.

Further, in the above-described molded preform, a structure can also be employed wherein a side surface of the molded preform has a concave shape or a stepped shape and at least a part of the side surface of the molded preform has an undercut shape. In such a structure, when the above-described insert molding is performed, the molded preform becomes a formation extremely hard to be fallen off from the side of the liquefied resin, and a molded composite extremely high in joining strength between both sides can be realized.

Further, the present invention also provides a molded composite wherein the above-described thermoplastic resin prepreg or the above-described molded preform is insert-molded (or outsert-molded) by the following constituent element (IV) or (V):
a constituent element (IV): a thermoplastic resin (C) comprising a same or a same kind of resin as the above-described thermoplastic resin (A); or
a constituent element (V): a thermoplastic resin (D) having a melting point lower than that the above-described thermoplastic resin (A).

In such a molded composite, since the constituent element (IV) or (V) used for insert (or outsert) molding comprises a thermoplastic resin (C) comprising a same or a same kind of resin as the thermoplastic resin (A) or a thermoplastic resin (D) having a melting point not higher than a melting point of the thermoplastic resin (A), it becomes possible that the thermoplastic resin (B) being used in the thermoplastic resin prepreg or the molded preform exhibits an excellent adhesiveness relatively to the thermoplastic resin (C) or (D), a satisfactorily high adhesiveness between resins required for insert (or outsert) molding can be exhibited.

In the above-described molded composite, in particular, a structure can be employed wherein the molded composite is insert-molded by placing the above-described molded preform in a mold and injection molding the thermoplastic resin (C) or (D). By injection molding, the molding becomes easy, and it can be easily applied even to mass production.

Further, in the above-described molded composite, a structure can be employed wherein the above-described thermoplastic resin (C) or (D) comprises a fiber reinforced resin containing reinforcing fibers. By making the thermoplastic resin (C) or (D) as a fiber reinforced resin, it becomes possible to enhance the strength and rigidity as the whole of the molded composite.

In this case, if the above-described thermoplastic resin (C) or (D) comprises a fiber reinforced resin containing reinforcing fibers with a fiber length of 1 mm or less, a high reinforcement effect due to the reinforcing fibers can be obtained.

Further, in the above-described molded composite, a formation can also be employed wherein a thermoplastic resin prepreg is stacked together with a thermoplastic resin sheet, and the thermoplastic resin sheet is made of the above-described thermoplastic resin (A) or (C). In case of obtaining a molded composite by placing the above-described thermoplastic resin prepreg in a mold and insert-molding the above-described thermoplastic resin prepreg by supplying a melted resin around the thermoplastic resin prepreg in the mold, in the molded composite having such a formation, the melted resin and the above-described thermoplastic resin sheet can be efficiently joined and integrated, and a molded composite having an excellent appearance can be obtained with a high productivity.

Furthermore, the present invention also provides a molded composite wherein a plurality of the aforementioned thermoplastic resin prepregs stacked to each other, or the above-described molded preform, is press-molded. In such a molded composite, the thermoplastic resin (B) unevenly distributed on the surface site of the thermoplastic resin prepreg exhibits an excellent adhesiveness in the press molding, and a good press molding easily becomes possible. Further, in press molding of prepregs to each other, an adhesion via the thermoplastic resin (B) becomes possible at a low temperature at which the matrix resin (constituent element (I)) being used for the prepreg does not melt. Therefore, a desired laminate can be easily obtained without disturbing the arrangement of reinforcing fibers in the matrix resin.

A method for producing a thermoplastic resin prepreg according to the present invention is a method for producing the above-described thermoplastic resin prepreg, and comprises at least the following steps of:
step (1): a drawing step for drawing at least a base material of a constituent element (III);
step (2): a resin impregnation step for impregnating a melted constituent element (I) into the base material of the constituent element (III) drawn at the drawing step (1);
step (3): a resin adhesion step for making a constituent element (II) adhere only to a surface of a resin impregnated material prepared at the resin impregnation step (2); and
step (4): a taking-up step for cooling a thermoplastic resin prepreg prepared at the resin adhesion step (3) and taking it up.

In such a method for producing a thermoplastic resin prepreg according to the present invention, a prepreg formation comprising reinforcing fibers and a matrix resin is formed by impregnating the melted constituent element (I) into the base material of the constituent element (III) drawn at the drawing step (1), for example, immediately thereafter, within a period when the constituent element (I) has not been cooled up, the constituent element (II) is unevenly distributed on a surface site at the resin adhesion step (3) by making the constituent element (II) adhere only to a surface of the resin impregnated material prepared at the resin impregnation step (2), and thereafter, at the taking-up step (4), the thermoplastic resin prepreg prepared at the resin adhesion step (3) is taken up after being cooled. By such a series of steps, the aforementioned thermoplastic resin prepreg is continuously produced efficiently.

More concretely, as shown in the embodiment described later, a method can be employed wherein, in the above-described resin impregnation step (2), the base material of the constituent element (III) drawn at the above-described drawing step (1) is passed through a die supplied with the melted constituent element (I), and the melted constituent element (I) is impregnated into the base material in the die.

Further, a method can also be employed wherein, in the above-described resin impregnation step (2), a powder-like constituent element (I) is placed in the base material of the constituent element (III) drawn at the drawing step (1), and then, the powder-like constituent element (I) is melted and impregnated.

Further, a method can also be employed wherein, in the above-described resin impregnation step (2), the base material of the constituent element (III) drawn at the drawing step (1) and a sheet-like constituent element (I) are stacked to each other, and at the same time of or after stacking, the sheet-like constituent element (I) is melted and impregnated.

Further, a method can also be employed wherein, in the above-described resin impregnation step (2), the base material of the constituent element (III) drawn at the drawing step (1) and a fibrous constituent element (I) are combined with each other, and at the same time of or after combining, the fibrous constituent element (I) is melted and impregnated.

Further, in the above-described resin adhesion step (3), the constituent element (II) can be provided only to a surface of the resin impregnated material just having passed through the resin impregnation step (2). For example, a method can be employed wherein, in the above-described resin adhesion step (3), the melted constituent element (II) is made adhere to one surface or the entire surface of the resin impregnated material, having passed through the resin impregnation step (2), at a layered form. In this case, in addition to a method for coating the melted resin, a method can also be employed wherein a sheet-like constituent element (II) is made adhere. Further, a method can also be employed wherein, in the above-described resin adhesion step (3), a particle-like or fibrous constituent element (II) is made adhere to a surface of the resin impregnated material having passed through the above-described resin impregnation step (2).

Further, a method for producing a molded preform according to the present invention comprises a method wherein a plurality of the aforementioned thermoplastic resin prepregs are stacked, heated and pressed, and are integrated via a thermoplastic resin (B) interposed between stacked thermoplastic resin prepregs. Since the thermoplastic resin prepregs are integrated with each other via the thermoplastic resin (B), it is prevented that any of prepreg layers of the molded preform is delaminated at the time of molding, and a molded preform as a desired stacked material can be easily obtained. For stacking the thermoplastic resin prepregs, it is preferred to perform the stacking of the thermoplastic resin prepregs by an automatic stacking apparatus. As the automatic stacking apparatus, for example, an auto-fiber-placement apparatus (AFP, automatic fiber stacking apparatus), an auto-tape-layup apparatus (ATL, automatic tape stacking apparatus), etc. can be exemplified. Because the prepregs can be joined to each other via the thermoplastic resin (B) in the thermoplastic resin prepreg according to the present invention, it becomes possible to integrate them easily at a lower temperature and a lower pressure. If they are stacked by an automatic stacking apparatus, not only heating and pressing can be precisely carried out, but also a complicated shape can be easily followed, and further, the efficiency for the stacking can also be enhanced. Where, with respect to the automatic fiber stacking apparatus and automatic tape stacking apparatus, there are explanations, for example, in "http://www.compositeworld.com/articles/afpatl-design-to-manufacture-bridging-the-gap.aspx", "http://www.compositeworld.com/articles/atl-and-afp-defining-the-megatrends-in-composite-aerostructures" and "http://www.compositeworld.com/articles/atl-and-afp-signs-of-evolution-in-machine-process-control", these apparatuses can be appropriately selected and used.

Further, a method for producing a molded preform according to the present invention comprises a method wherein the aforementioned thermoplastic resin prepreg and a thermoplastic resin sheet are stacked to each other, heated and pressed, and are integrated via a thermoplastic resin (B) which is unevenly distributed to a surface site of the thermoplastic resin prepreg. In such a method, since the thermoplastic resin (B), which is unevenly distributed to a surface site of the thermoplastic resin prepreg, is disposed in advance, it becomes possible to easily integrate the above-described thermoplastic resin sheet and form the molded preform.

Further, a method for producing a molded composite according to the present invention comprises a method wherein the aforementioned thermoplastic resin prepreg or molded preform is placed in a mold, the following constituent element (IV) or (V) is supplied around the thermoplastic resin prepreg or the molded preform, and the thermoplastic resin prepreg or the molded preform is insert-molded by a thermoplastic resin (C) or (D):
a constituent element (IV): a thermoplastic resin (C) comprising a same or a same kind of resin as the thermoplastic resin (A); or
a constituent element (V): a thermoplastic resin (D) having a melting point lower than that of the thermoplastic resin (A).

In such a method, since the thermoplastic resin prepreg or the molded preform has the thermoplastic resin (B) excellent in adhesiveness on its surface site, it is insert-molded by the thermoplastic resin (C) or (D) via the thermoplastic resin (B) with a high adhesiveness.

Further, in the above-described method for producing a molded composite, the molded composite can be insert-molded by placing the above-described molded preform in a mold and injection molding the above-described thermoplastic resin (C) or (D).

Further, in the above-described method for producing a molded composite, a method can also be employed wherein a molded preform prepared by stacking a thermoplastic resin prepreg and a thermoplastic resin sheet to each other is placed in a mold so that a portion of the thermoplastic resin prepreg is placed at a position including a center in a thickness direction of a molded composite to be molded and so that a portion of the thermoplastic resin sheet is placed at a position of an outer surface side of the molded composite to be molded, and is insert-molded by the above-described thermoplastic resin (C) or (D).

Furthermore, a method for producing a molded composite according to the present invention comprises a method wherein a plurality of the aforementioned thermoplastic resin prepregs stacked to each other, or the aforementioned molded preform is press-molded. In the press molding, since the thermoplastic resin (B) unevenly distributed to a surface site of the thermoplastic resin prepreg or the molded preform exhibits an excellent adhesiveness, a desired press molding can be easily performed. Further, as aforementioned, in press molding of prepregs to each other, an adhesion via the thermoplastic resin (B) becomes possible at a low temperature at which the matrix resin (constituent element (I)) being used for the prepreg does not melt, and a desired laminate can be easily obtained without disturbing the arrangement of reinforcing fibers in the matrix resin.

### Effect according to the Invention

Thus, in the thermoplastic resin prepreg and the method for producing the same according to the present invention, can be obtained a thermoplastic resin prepreg the surface site of which is greatly enhanced in adhesiveness, while the inside of which is maintained in a desired formation comprising reinforcing fibers and a matrix resin, and by performing molding using this thermoplastic resin prepreg, easily a molded product having a desired reinforcing fiber arrangement formation and capable of exhibiting target mechanical properties can be produced with a good productivity.

Further, in the molded preform, the molded composite and the method for producing the same according to the present invention using such a thermoplastic resin prepreg, utilizing an excellent adhesiveness of the thermoplastic resin (B) unevenly distributed on a surface site of the thermoplastic resin prepreg, desired molded preform and molded composite can be easily produced.

### Brief explanation of the drawings

[Fig. 1] Fig. 1 is a schematic sectional view of a thermoplastic resin prepreg according to an embodiment of the present invention.
[Fig. 2] Fig. 2 is a schematic diagram showing a method for producing a thermoplastic resin prepreg according to an embodiment of the present invention.
[Fig. 3] Fig. 3 is a schematic diagram showing a method for producing a thermoplastic resin prepreg according to another embodiment of the present invention.
[Fig. 4] Fig. 4 is a schematic diagram showing a method for producing a thermoplastic resin prepreg according to a further embodiment of the present invention.
[Fig. 5] Fig. 5 is a schematic diagram showing a method for producing a molded composite according to an embodiment of the present invention.

### Embodiments for carrying out the Invention

Hereinafter, desirable embodiments of the present invention will be explained referring to figures.

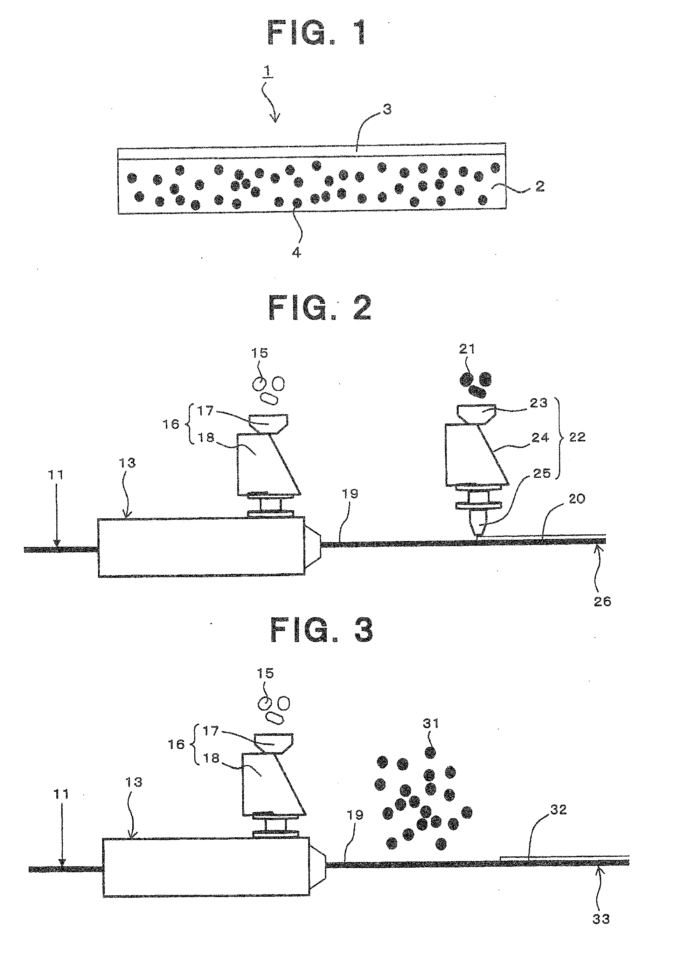

Fig. 1 shows a schematic section of a thermoplastic resin prepreg according to an embodiment of the present invention. In Fig. 1, symbol 1 indicates a thermoplastic resin prepreg formed in a sheet-like shape, and the thermoplastic resin prepreg 1 comprises at least the following constituent elements (I) to (III).
a constituent element (I): 20-60 parts by weight of a thermoplastic resin (A) having a linear or branched polymer structure (symbol 2 in Fig. 1)
a constituent element (II): 2-10 parts by weight of a thermoplastic resin (B) which is unevenly distributed to a surface site and has a melting point lower than that of the thermoplastic resin (A) (symbol 3 in Fig. 1)
a constituent element (III): 30-78 parts by weight of reinforcing fibers (symbol 4 in Fig. 1)

In particular, in this embodiment, as a desired formation, the above-described thermoplastic resin (A) (2) has a linear or branched polymer structure, and the above-described thermoplastic resin (B) (3) has a cyclic polymer structure. Then, thermoplastic resin (A) (2) and thermoplastic resin (B) (3) comprise same kind of resins except molecular structures thereof. If preferable kinds of resins are shown more concretely, thermoplastic resin (A) (2) comprises a high-molecular polyphenylene sulfide having a weight average molecular weight of 10,000 or more, and thermoplastic resin (B) (3) comprises a cyclic polyphenylene sulfide represented by the aforementioned chemical formula (1).

Such a thermoplastic resin prepreg 1 can be produced, for example, by a method shown in Fig. 2, Fig. 3 or Fig. 4. In the method shown in Fig. 2, for example, a strip-like and sheet-like reinforcing fiber base material 11, in which continuous reinforcing fibers (for example, carbon fibers) are arranged in one direction, is drawn at a drawing step. The reinforcing fiber base material 11 drawn at the drawing step is passed through the inside of a die 13 supplied with a melted thermoplastic resin (A) (for example, high-molecular polyphenylene sulfide having a weight average molecular weight of 10,000 or more). In die 13, the melted thermoplastic resin (A) is impregnated into reinforcing fiber base material 11. The thermoplastic resin (A) is supplied into die 13, for example, after a pellet-like thermoplastic resin (A) 15 is deposited into a hopper 17 of a supply device 16 and melted by an extruder 18.

To a resin impregnated material 19 having passed through the above-described resin impregnation step (namely, reinforcing fiber base material 11 impregnated with the melted thermoplastic resin (A)), after the resin impregnated material 19 has substantially come out of die 13, in a resin adhesion step, a melted thermoplastic resin (B) 20 (for example, cyclic polyphenylene sulfide represented by the aforementioned chemical formula (1)) is coated and made adhere onto a surface site thereof at a layered form. The melted thermoplastic resin (B) 20, for example, pellet-like thermoplastic resin (B) 21 is deposited into a hopper 23 of a coating device 22, after being melted by an extruder 24, discharged from a nozzle 25 at the tip portion thereof, and coated and made adhere onto the surface of resin impregnated material 19.

A thermoplastic resin prepreg 26 obtained at the above-described resin adhesion step has a sectional formation, for example, as shown in Fig. 1, and this is cooled and taken up. In this taking-up step, although figures are omitted, a known means can be appropriately employed, such as a winding means, means for cutting the sheet-like material at an appropriate size and stacking it in order, etc.

In a method shown in Fig. 3, it is same as the method shown in Fig. 2 up to the exit of die 13, substantially immediately after resin impregnated material 19 has come out of die 13, in the resin adhesion step, particle-like thermoplastic resin (B) 31 (for example, cyclic polyphenylene sulfide represented by the aforementioned chemical formula (1)) is dispersed onto a surface site of resin impregnated material 19 and made adhere to the surface of the resin impregnated material 19. Since the dispersed thermoplastic resin (B) 31 has a low melting point, it is melted more or less by resin impregnated material 19 which is in a high-temperature condition, and it is distributed at a layered form over the entire surface of the resin impregnated material 19 or sparsely, and it forms a thermoplastic resin (B) layer 32. A thermoplastic resin prepreg 33 obtained at the above-described resin adhesion step also has a sectional formation, for example, similar to that shown in Fig. 1 (there can be a case where thermoplastic resin (B) layer 32 is continuously extended and a case where it is discontinuously extended.) and this is cooled and taken up. In this taking-up step, although figures are omitted, a known means can be appropriately employed, such as a winding means, means for cutting the sheet-like material at an appropriate size and stacking it in order, etc.

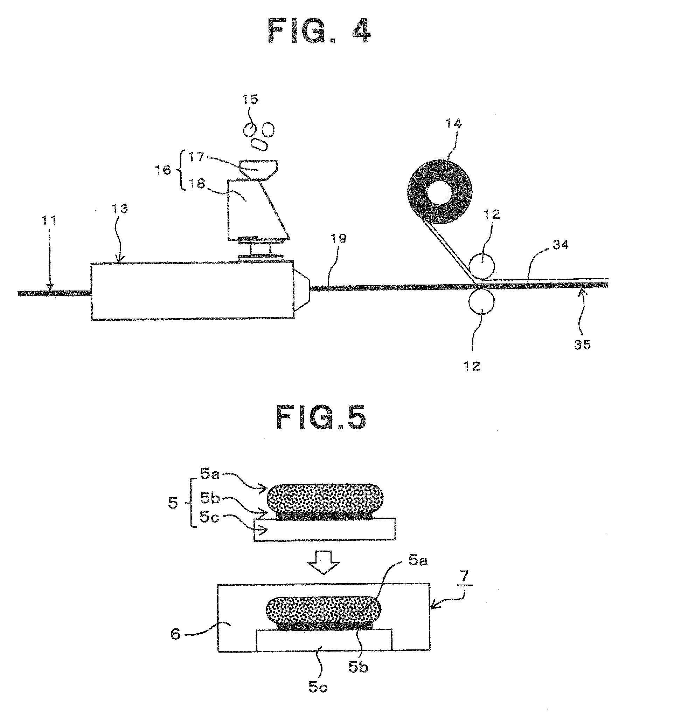

In a method shown in Fig. 4, it is same as the method shown in Fig. 2 up to the exit of die 13, substantially immediately after resin impregnated material 19 has come out of die 13, in the resin adhesion step, a thermoplastic resin (B) 14 (for example, cyclic polyphenylene sulfide represented by the aforementioned chemical formula (1)) of a sheet-like nonwoven fabric (as a micro view, because it is a fiber aggregate, it can be referred as a fibrous material) is heated and pressed by nip rolls 12 and made adhere to the surface of the resin impregnated material 19. Since the distributed thermoplastic resin (B) 14 has a low melting point, it is melted more or less by resin impregnated material 19 which is in a high-temperature condition, and it is distributed at a layered form over the entire surface of the resin impregnated material 19 or sparsely, and it forms a thermoplastic resin (B) layer 34. A thermoplastic resin prepreg 35 obtained at the above-described resin adhesion step also has a sectional formation, for example, similar to that shown in Fig. 1 (there can be a case where thermoplastic resin (B) layer 34 is continuously extended and a case where it is discontinuously extended.) and this is cooled and taken up. In this taking-up step, although figures are omitted, a known means can be appropriately employed, such as a winding means, means for cutting the sheet-like material at an appropriate size and stacking it in order, etc.

As aforementioned, thermoplastic resin prepregs 26, 33, 35 thus produced have an excellent adhesiveness by the thermoplastic resin (B) unevenly distributed on the surface site. Since this excellent adhesiveness is given only to the surface site, a desired prepreg formation comprising the reinforcing fibers and the matrix resin (thermoplastic resin (A)) is maintained as it is, and while an adhesiveness in insert molding or press molding is enhanced, desired mechanical properties as a molded product can be ensured. Therefore, also in a molded preform and a molded composite using these thermoplastic resin prepregs 26, 33, 35, desired moldability and mechanical properties can be ensured.

Fig. 5 shows a method for producing a molded composite according to an embodiment of the present invention. A thermoplastic resin prepreg 5a obtained by the method shown in Fig. 3 and a thermoplastic resin sheet 5c are integrated via a thermoplastic resin (B) 5b unevenly distributed on a surface site of the thermoplastic resin prepreg, and a molded preform 5 is formed. This molded preform 5 is placed in a mold, into the mold a melted thermoplastic resin (C) or (D) 6 is supplied by injection molding, and a molded composite 7 is obtained by insert molding. By a condition where the above-described thermoplastic resin sheet 5c is stacked, the thermoplastic resin prepreg 5a can be disposed at a position including a center in the thickness direction of the molded composite 7 to be molded. As described hereinabove, extremely easily, the thermoplastic resin prepreg at the time of insert molding can be positioned at central portion in the thickness direction of the molded composite to be molded, and occurrence of a warp of the molded composite obtained can be suppressed to be minimum.

Further, in the molded preform 5 shown in Fig. 5, because it has a side surface including both of a concave shape and a stepped shape, when the melted thermoplastic resin (C) or (D) 6 is supplied by injection molding, the melted resin flows into the part of the concave shape and the stepped shape, and a good adhesiveness can be ensured. In case of Fig. 5, because non-charge of the melted resin on the surface of the molded composite is also suppressed to be minimum, reduction of the quality in appearance of the molded composite obtained can be suppressed to be minimum.

### Industrial Applications of the Invention

The thermoplastic resin prepreg according to the present invention can be applied to any molding requiring an excellent adhesiveness without damaging mechanical properties, for example, when thermoplastic resin prepregs are stacked to each other or insert (or outsert) molding is performed using a thermoplastic resin prepreg, and in particular, it is suitable for insert molding or press molding.

### Explanation of symbols

- 1, 5a:: thermoplastic resin prepreg
- 2:: thermoplastic resin (A)
- 3, 5b:: thermoplastic resin (B)
- 4:: reinforcing fiber
- 5:: molded preform
- 5c:: thermoplastic resin sheet
- 6:: thermoplastic resin (C) or (D)
- 7:: molded composite
- 11:: reinforcing fiber base material
- 12:: nip roll
- 13:: die
- 14:: nonwoven fabric-like thermoplastic resin (B)
- 15:: pellet-like thermoplastic resin (A)
- 16:: supply device
- 17:: hopper
- 18:: extruder
- 19:: resin impregnated material
- 20:: melted thermoplastic resin (B)
- 21:: pellet-like thermoplastic resin (B)
- 22:: coating device
- 23:: hopper
- 24:: extruder
- 25:: nozzle
- 26, 33, 35:: thermoplastic resin prepreg
- 31:: particle-like thermoplastic resin (B)
- 32, 34:: thermoplastic resin (B) layer

## Claims

1. A thermoplastic resin prepreg comprising at least the following constituent elements (I) to (III):
a constituent element (I): 20-60 parts by weight of a thermoplastic resin (A) having a linear or branched polymer structure;
a constituent element (II): 2-10 parts by weight of a thermoplastic resin (B) which is unevenly distributed to a surface site and has a melting point lower than that of said thermoplastic resin (A); and
a constituent element (III): 30-78 parts by weight of reinforcing fibers.

2. The thermoplastic resin prepreg according to claim 1, wherein said thermoplastic resin (A) and said thermoplastic resin (B) comprise same kind of resins except molecular structures thereof.

3. The thermoplastic resin prepreg according to claim 1 or 2, wherein said thermoplastic resin (A) comprises a homopolymer resin, and said thermoplastic resin (B) comprises a copolymer resin or a random polymer resin.

4. The thermoplastic resin prepreg according to claim 1 or 2, wherein said thermoplastic resin (A) comprises a polyamide 6 resin, a polyamide 66 resin, a polyamide 46 resin or a polyamide 9T resin, and said thermoplastic resin (B) comprises a copolymerized polyamide resin, a polyamide 11 resin, a polyamide 12 resin or a polyamide 610 resin.

5. The thermoplastic resin prepreg according to claim 1 or 2, wherein said thermoplastic resin (A) has a linear or branched polymer structure, and said thermoplastic resin (B) has a cyclic molecular structure.

6. The thermoplastic resin prepreg according to any of claims 1, 2 and 5, wherein said thermoplastic resin (A) comprises a high-molecular-weight polyphenylene sulfide with a weight average molecular weight of 10,000 or more, and said thermoplastic resin (B) comprises a resin composition whose main constituent is a cyclic polyphenylene sulfide represented by a chemical formula (1). 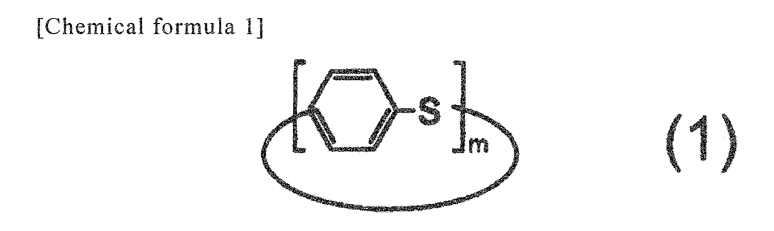 (Where, "m" represents an integer of 4 to 20, and "m" may be a mixture of 4 to 20.)

7. The thermoplastic resin prepreg according to any of claims 1, 2 and 5, wherein said thermoplastic resin (A) comprises a high-molecular-weight polyetheretherketone with a weight average molecular weight of 10,000 or more, and said thermoplastic resin (B) comprises a resin composition whose main constituent is a cyclic polyetheretherketone.

8. The thermoplastic resin prepreg according to claim 1, wherein said thermoplastic resin (A) and said thermoplastic resin (B) comprise different kind of resins.

9. The thermoplastic resin prepreg according to claim 1 or 6, wherein said thermoplastic resin (A) comprises a polyphenylene sulfide resin, a polyamide resin or a polyolefin resin, and said thermoplastic resin (B) comprises a resin composition whose main constituent is an epoxy resin which substantially does not contain a curing agent.

10. The thermoplastic resin prepreg according to any of claims 1 to 9, wherein said thermoplastic resin (B) exists on the entire surface of said thermoplastic resin (A) at a layer form.

11. The thermoplastic resin prepreg according to any of claims 1 to 9, wherein said thermoplastic resin (B) exists on a surface of said thermoplastic resin (A) at a particle-like or fiber-like form.

12. The thermoplastic resin prepreg according to any of claims 1 to 11, wherein said prepreg is configured as a sheet-like form.

13. The thermoplastic resin prepreg according to any of claims 1 to 12, wherein at least a part of said reinforcing fibers have a form of a unidirectional reinforcing fiber base material in which continuous reinforcing fibers are arranged in a single direction in parallel to each other.

14. The thermoplastic resin prepreg according to any of claims 1 to 13, wherein said at least a part of said reinforcing fibers have a form of a reinforcing fiber woven fabric.

15. The thermoplastic resin prepreg according to any of claims 1 to 14, wherein said reinforcing fibers include carbon fibers.

16. A molded preform wherein a plurality of thermoplastic resin prepregs according to any of claims 1 to 15 are stacked, they are heated and pressed, and they are integrated via a thermoplastic resin (B) which is interposed between said thermoplastic resin prepregs.

17. A molded preform wherein a thermoplastic resin prepreg according to any of claims 1 to 15 is stacked together with a thermoplastic resin sheet, they are heated and pressed, and they are integrated via a thermoplastic resin (B) which is unevenly distributed to a surface site of said thermoplastic resin prepreg.

18. The molded preform according to claim 16 or 17, wherein a side surface of said molded preform has a concave shape or a stepped shape.

19. A molded composite wherein a thermoplastic resin prepreg according to any of claims 1 to 15 or a molded preform according to any of claims 16 to 18 is insert-molded by the following constituent element (IV) or (V):
a constituent element (IV): a thermoplastic resin (C) comprising a same or a same kind of resin as said thermoplastic resin (A); or
a constituent element (V): a thermoplastic resin (D) having a melting point lower than that of said thermoplastic resin (A).

20. The molded composite according to claim 19, wherein said molded composite is insert-molded by placing said molded preform in a mold and injection molding said thermoplastic resin (C) or (D).

21. The molded composite according to claim 19 or 20, wherein said thermoplastic resin (C) or (D) comprises a fiber reinforced resin containing reinforcing fibers.

22. The molded composite according to claim 21, wherein said thermoplastic resin (C) or (D) comprises a fiber reinforced resin containing reinforcing fibers with a fiber length of 1 mm or less.

23. The molded composite according to any of claims 19 to 22, wherein a thermoplastic resin prepreg is stacked together with a thermoplastic resin sheet, and said thermoplastic resin sheet is made of said thermoplastic resin (A) or (C).

24. A molded composite wherein a plurality of thermoplastic resin prepregs according to any of claims 1 to 15 stacked to each other, or a molded preform according to any of claims 16 to 18, is press-molded.

25. A method for producing a thermoplastic resin prepreg according to any of claims 1 to 15 comprising at least the following steps of:
step (1): a drawing step for drawing at least a base material of a constituent element (III);
step (2): a resin impregnation step for impregnating a melted constituent element (I) into said base material of said constituent element (III) drawn at said drawing step (1);
step (3): a resin adhesion step for making a constituent element (II) adhere only to a surface of a resin impregnated material prepared at said resin impregnation step (2); and
step (4): a taking-up step for cooling a thermoplastic resin prepreg prepared at said resin adhesion step (3) and taking it up.

26. The method for producing a thermoplastic resin prepreg according to claim 25, wherein, in said resin impregnation step (2), said base material of said constituent element (III) drawn at said drawing step (1) is passed through a die supplied with said melted constituent element (I), and said melted constituent element (I) is impregnated into said base material in said die.

27. The method for producing a thermoplastic resin prepreg according to claim 25, wherein, in said resin impregnation step (2), a powder-like constituent element (I) is placed in said base material of said constituent element (III) drawn at said drawing step (1), and then, said powder-like constituent element (I) is melted and impregnated.

28. The method for producing a thermoplastic resin prepreg according to claim 25, wherein, in said resin impregnation step (2), said base material of said constituent element (III) drawn at said drawing step (1) and a sheet-like constituent element (I) are stacked to each other, and at the same time of or after stacking, said sheet-like constituent element (I) is melted and impregnated.

29. The method for producing a thermoplastic resin prepreg according to claim 25, wherein, in said resin impregnation step (2), said base material of said constituent element (III) drawn at said drawing step (1) and a fibrous constituent element (I) are combined with each other, and at the same time of or after combining, said fibrous constituent element (I) is melted and impregnated.

30. The method for producing a thermoplastic resin prepreg according to any of claims 25 to 29, wherein, in said resin adhesion step (3), a sheet-like constituent element (II) is provided only to a surface of a resin impregnated material having passed through said resin impregnation step (2).

31. The method for producing a thermoplastic resin prepreg according to any of claims 25 to 30, wherein, in said resin adhesion step (3), a melted constituent element (II) is made adhere to one surface or the entire surface of a resin impregnated material, having passed through said resin impregnation step (2), at a layered form.

32. The method for producing a thermoplastic resin prepreg according to any of claims 25 to 31, wherein, in said resin adhesion step (3), a particle-like or fibrous constituent element (II) is made adhere to a surface of a resin impregnated material having passed through said resin impregnation step (2).

33. A method for producing a molded preform, wherein a plurality of thermoplastic resin prepregs according to any of claims 1 to 15 are stacked, heated and pressed, and are integrated via a thermoplastic resin (B) interposed between stacked thermoplastic resin prepregs.

34. The method for producing a molded preform according to claim 33, wherein said stacking of said thermoplastic resin prepregs is performed by an automatic stacking apparatus.

35. A method for producing a molded preform, wherein a thermoplastic resin prepreg according to any of claims 1 to 15 and a thermoplastic resin sheet are stacked to each other, heated and pressed, and are integrated via a thermoplastic resin (B) which is unevenly distributed to a surface site of said thermoplastic resin prepreg.

36. A method for producing a molded composite, wherein a thermoplastic resin prepreg according to any of claims 1 to 15 or a molded preform according to any of claims 16 to 18 is placed in a mold, the following constituent element (IV) or (V) is supplied around said thermoplastic resin prepreg or said molded preform, and said thermoplastic resin prepreg or said molded preform is insert-molded by a thermoplastic resin (C) or (D):
a constituent element (IV): a thermoplastic resin (C) comprising a same or a same kind of resin as said thermoplastic resin (A); or
a constituent element (V): a thermoplastic resin (D) having a melting point lower than that of said thermoplastic resin (A).

37. The method for producing a molded composite according to claim 36, wherein said molded composite is insert-molded by placing said molded preform in a mold and injection molding said thermoplastic resin (C) or (D).

38. The method for producing a molded composite according to claim 36 or 37, wherein a molded preform prepared by stacking a thermoplastic resin prepreg and a thermoplastic resin sheet to each other is placed in a mold so that a portion of said thermoplastic resin prepreg is placed at a position including a center in a thickness direction of a molded composite to be molded and so that a portion of said thermoplastic resin sheet is placed at a position of an outer surface side of said molded composite to be molded, and is insert-molded by said thermoplastic resin (C) or (D).

39. A method for producing a molded composite, wherein a plurality of thermoplastic resin prepregs according to any of claims 1 to 15 stacked to each other, or a molded preform according to any of claims 16 to 18, is press-molded.
